# EUROPÄISCHE PATENTSCHRIFT

(11) **EP 2 263 502 B1**
(45) Veröffentlichungstag und Bekanntmachung des Hinweises auf die Patenterteilung: **17.04.2013**
(21) Anmeldenummer: 10164015.9
(22) Anmeldetag: 27.05.2010
(51) Int. Cl.: A47J 31/44

(54) **Einrichtung zum Erwärmen und Aufschäumen von Milch**
Device for heating and foaming milk
Dispositif de chauffage et de moussage de lait

(30) Priorität: 17.06.2009 DE 102009025986
(43) Veröffentlichungstag der Anmeldung: 22.12.2010
(73) Patentinhaber: Cafina AG, 5502 Hunzenschwil (CH)
(72) Erfinder: Fliegauf, Michael, 4622 Egerkingen (CH); Frischknecht, Martin, 4805 Brittnau (DE)
(74) Vertreter: Dantz, Jan Henning

(56) Entgegenhaltungen:
- WO-A1-03/092458
- DE-A1- 3 632 375

## Beschreibung

Die Erfindung betrifft eine Einrichtung zum Erwärmen und Aufschäumen von Milch, insbesondere an einer Kaffeemaschine, welche folgendes aufweist: eine Dampferzeugungseinrichtung, welche dazu ausgelegt ist, durch Erhitzen von Wasser Dampf zu erzeugen, der durch eine erste Leitung aus der Dampferzeugungseinrichtung abführbar ist, die mittels eines Absperrventils geöffnet und abgesperrt werden kann, und eine Förderpumpe, mit der Luft in eine zweite Leitung pumpbar ist.

Eine gattungsgemäße Einrichtung zum Erwärmen und Aufschäumen von Milch ist aus der DE 44 45 436 bekannt. Nach diesem Vorschlag werden Luft und Dampf sowie Milch in einer Mischklammer gemischt und dann wird die aufgeschäumte Milch in ein Behältnis geleitet. Eine weitere Einrichtung zum Erwärmen und Aufschäumen von Milch ist aus der WO 2003/092458 bekannt, welche wobei hier Milch und Dampf in einem Fördermittel zusammengeleitet werden und sodann mit dem Fördermittel in ein Milchbehältnis geleitet werden.

Die erzielbaren Schaumqualitäten sind jedoch jeweils nicht zufriedenstellend.

Die Erfindung hat die Aufgabe, ausgehend von dem gattungsgemäßen Stand der Technik der DE 44 45 436 eine weiterentwickelte Einrichtung zum Erwärmen und Aufschäumen von Milch zu schaffen.

Die Erfindung löst diese Aufgabe durch den Gegenstand des Anspruchs 1. Die Erfindung schafft zudem das Verfahren des Anspruchs 4.

Danach ist der Austritt dieser ersten Leitung dazu ausgelegt, direkt in ein Behältnis einzutauchen, in welchem sich die aufzuschäumende Milch befindet; und der Austritt der zweiten Leitung ist dazu ausgelegt, in Hinsicht auf den Fluidweg getrennt beabstandet von der ersten Leitung direkt in das Behältnis einzutauchen, in welchem sich die aufzuschäumende Milch befindet, so dass Dampf und Luft beim Erwärmen und Aufschäumen der Milch vollständig voneinander getrennt zuführbar sind.

Dies bietet zunächst in konstruktiver Hinsicht gegenüber der DE 44 45 436 den Vorteil, dass auf eine Mischkammer verzichtet werden kann.

Gegenüber der WO 2003/092458 ergibt sich dagegen in konstruktiver Hinsicht der Vorteil, dass kein Fördermittel erforderlich ist, um Milch und Dampf, die aus ersten und zweiten Leitungen austreten, zunächst zu mischen, und diese Mischung sodann in ein mit Milch gefülltes Behältnis zu leiten.

Daneben ergibt sich eine ganze Reihe deutlicher verfahrenstechnischer Vorteile.

So werden gegenüber den Lösungen der DE 44 45 436 und der WO 2003/092458 mit der erfindungsgemäßen Lösung Milchschäume erzielen, die dem "echten" handgeschäunten Barrista-Milchschaum nach original italienischer Art besonders nahe komnen.

Insbesondere gibt es bei der Zuführung von Dampf und Luft über das gemeinsame Fördermittel nach Art der WO 2003/092458 einen einzigen Austrittsquerschnitt, der auf das Dampf-Luft-Gemisch abgestimmt ist. Wenn dagegen nur Luft ohne Dampf über diesen Querschnitt zugeführt würde, wird keine ausreichende Strömungsgeschwindigkeit und somit Verwirbelung der Luft in der Milch ermöglicht.

Damit wendet sich die Erfindung nicht nur von dem gattungsgemäßen Stand der Technik ab sondern auch von dem in der WO 2003/092458 eingeschlagenen Weg, Luft und Dampf zunächst zu vermischen, bevor sie in die Milch geleitet werden, bewusst ab. Stattdessen werden Milch und Dampf direkt in getrennten Leitungen in ein mit aufzuschäumender Milch gefülltes Behältnis geleitet.

Die erfindungsgemäße Lösung bietet aber auch noch eine ganze Reihe von weiteren deutlichen Vorteilen gegenüber dem Stand der Technik. So ist die Luftzufuhr durch eine vom Dampf getrennte Leitung unabhängig vom Zustand des Dampfes, der u.a. von der Dichte, der Sättigung, der Menge, der Strömungsgeschwindigkeit usw. beeinflusst wird.

Durch die getrennte Leitung von Luft und Dampf kann zudem leichter das jeweils optimale Volumen bzw. optimale Menge der beiden Medien in die Milch gebracht werden, da keine gegenseitige Beeinflussung der Medien berücksichtigt werden muss.

Durch die getrennte Leitung von Luft und Dampf kann ferner aufgrund der jeweils eigenen Austrittsöffnungen zeitlich voneinander getrennt Luft und Dampf zugeführt werden.

Eine getrennte Leitung von Luft und Dampf ermöglicht es zudem mit überraschend einfachen Mitteln, die Einbringzonen (Einbringebenen bzw. -höhen) der jeweiligen Medien unterschiedlich auszuführen, so dass z.B. der Dampf zum Erhitzen der Milch tiefer in der Milch als die Luft für das Aufschäumen eingeleitet wird. Dies ist bei der gemeinsamen Zuleitung von Luft und Dampf durch nur eine Leitung nicht möglich.

Durch die getrennte Leitung von Luft und Dampf kann der Austrittsquerschnitt und die Ausprägung des Austrittsquerschnitts der jeweiligen Zuführung von Luft und Dampf leichter speziell auf das jeweilige Medium angepasst werden.

Bei der getrennten Leitung von Luft und Dampf wird die Luft ähnlich wie beim traditionellen Aufschäumen der Milch durch den Barista, separat der Milch zugeführt. Somit erreicht man ein Schaumergebnis, das dem gewünschten Ergebnis eines von einem traditionellen Barista erstellten Schaums sehr nah kommt.

Durch die getrennte Zuführung von Luft arbeitet man ähnlich wie ein Barista mit kühler, nicht durch den Dampf erhitzte Luft. Auch der Barista bringt die normale (kühle) Außenluft über seine spezielle Handhabung der Dampflanze in die Milch. Der Effekt ist, dass der Prozess des Aufschäumens quasi dadurch verlängert und man eine bessere Schaumqualität, z.B. einen feineren Schaum, erreichen kann.

Nachfolgend wird die Erfindung anhand eines Ausführungsbeispiels näher erläutert. Es zeigt:

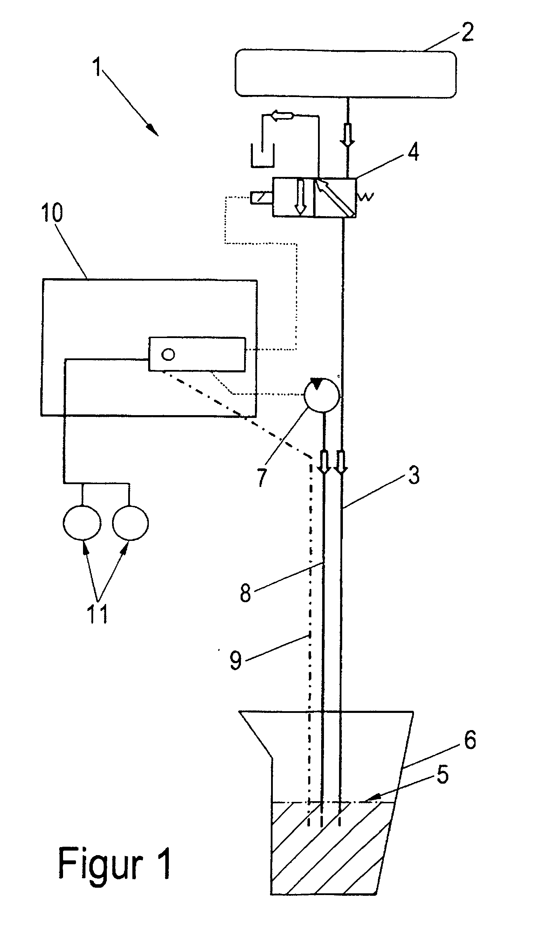

- Fig. 1: eine schematische Darstellung des Schaltplans einer erfindungsgemäßen Einrichtung 1 zum Erwärmen und Aufschäumen von Milch für eine Kaffeemaschine.

Fig. 1 zeigt eine Einrichtung 1 zum Erwärmen und Aufschäumen von Milch für eine Kaffeemaschine.

Die Einrichtung 1 weist eine Dampferzeugungseinrichtung 2 auf, welche dazu ausgelegt ist, durch Erhitzen von Wasser Dampf zu erzeugen, der durch eine erste Leitung 3 aus der Dampferzeugungseinrichtung 2 abgeleitet wird, die mittels eines Absperrventils 4 geöffnet und abgesperrt werden kann. Diese erste in Leitungsrichtung axial ein- oder mehrteilige Leitung 3 ist dazu ausgelegt, direkt mit ihrem Auslass in ein Behältnis 6 einzutauchen, das unter den Auslass gehalten oder gestellt werden kann und in welchem sich die aufzuschäumende Milch befindet.

Darüber hinaus weist die Einrichtung 1 eine Förderpumpe 7 auf, mit der Luft in eine zweite in Leitungsrichtung axial ein- oder mehrteilige Leitung 8 gepumpt werden kann, wobei auch der Auslass dieser zweiten Leitung 8 dazu ausgelegt ist, in Hinsicht auf den Fluidweg getrennt von der ersten Leitung 5 direkt in das Behältnis 6 einzutauchen, in welchem sich die aufzuschäumende Milch 5 befindet.

Darüber hinaus ist eine (Temperatur)Temperatursonde 9 vorgesehen, welche ebenfalls in das Behältnis 6 eintauchbar ist.

Diese Temperatursonde 9 ist an eine Steuerungsvorrichtung 10 angeschlossen, welche auch an die Förderpumpe 7 und das Dampfventil 3 angeschlossen ist.

Die Steuerungsvorrichtung 10 weist vorzugsweise einen (hier nicht dargestellten) Mikrocontroller auf sowie Eingabemittel 11 zur Eingabe von Steuerbefehlen und ggf. auch Ausgabemittel zur Anzeige von Informationen.

Milch und Dampf werden derart vollständig voneinander getrennt in die Milch geleitet, um eine besonders gute Schaumqualität zu erreichen.

### Bezugszeichen

- Einrichtung: 1
- Dampferzeugungseinrichtung: 2
- Erste Leitung: 3
- Dampf-Absperrventil: 4
- Milch: 5
- Behältnis: 6
- Förderpumpe: 7
- zweite Leitung: 8
- Temperatursonde: 9
- Steuerungsvorrichtung: 10
- Eingabemittel: 11

## Patentansprüche

1. Einrichtung zum Erwärmen und Aufschäumen von Milch, insbesondere an einer Kaffeemaschine, welche folgendes aufweist:
a) eine Dampferzeugungseinrichtung (2), welche dazu ausgelegt ist, durch Erhitzen von Wasser Dampf zu erzeugen, der durch eine erste Leitung (3) aus der Dampferzeugungseinrichtung (2) abführbar ist, die mittels eines Absperrventils (4) geöffnet und abgesperrt werden kann,
b) eine Förderpumpe (7), mit der Luft in eine zweite Leitung (8) pumpbar ist,
**dadurch gekennzeichnet, dass**
c) der Austritt der ersten Leitung (3) dazu ausgelegt ist, direkt in ein Behältnis (6) einzutauchen, in welchem sich die aufzuschäumende Milch befindet; und
d) dass der Austritt der zweiten Leitung (8) dazu ausgelegt ist, in Hinsicht auf den Fluidweg getrennt beabstandet von der ersten Leitung (3) direkt in das Behältnis (6) einzutauchen, in welchem sich die aufzuschäumende Milch befindet, so dass Dampf und Luft beim Erwärmen und Aufschäumen der Milch vollständig voneinander getrennt zuführbar sind.

2. Einrichtung (1) nach Anspruch 1, **gekennzeichnet durch** eine in das Behältnis (6) eintauchbare Temperatursonde (9).

3. Einrichtung (1) nach Anspruch 1 oder 2, **gekennzeichnet durch** eine an die Temperatursonde (6), die Förderpumpe (7) und das Dampf-Absperrventil (4) angeschlossene Steuerungsvorrichtung (10).

4. Verfahren zum Betreiben einer Einrichtung zum Erwärmen und Aufschäumen von Milch, insbesondere an einer Kaffeemaschine, nach einem der vorstehenden Ansprüche, **dadurch gekennzeichnet, dass** Dampf und Luft beim Erwärmen und Aufschäumen der Milch vollständig voneinander getrennt in das Behältnis mit Milch geleitet werden.

## Claims

1. Device for heating and foaming milk, particularly at a coffee machine, which comprises the following:
a) a steam generating device (2) designed for the purpose of generating, by heating water, steam which can be conducted by a first duct (3) out of the steam generating device (2), which can be opened and blocked by means of a blocking valve (4), and
b) a conveying pump (7) by which air can be pumped into a second duct (8), **characterised in that**
c) the outlet of the first duct (3) is designed for the purpose of directly entering into a container (6) in which the milk to be foamed is present, and
d) the outlet of the second duct (8) is designed for the purpose of entering directly into the container (6), in which the milk to be foamed is present, at a spacing from the first duct (3) to be separate with respect to the fluid path so that steam and air can be fed completely separately from one another during the heating and foaming of the milk.

2. Device (1) according to claim 1, **characterised by** a temperature probe (9) able to enter into the container (6).

3. Device (1) according to claim 1 or 2, **characterised by** a control device (10) connected with the temperature probe (6), the conveying pump (7) and the steam blocking valve (4).

4. Method of operating a device for heating and foaming milk, particularly at a coffee machine, according to any one of the preceding claims, **characterised in that** the steam and air are conducted into the container with milk completely separately from one another during the heating and foaming of the milk.

## Revendications

1. Installation permettant de chauffer et de faire mousser du lait, en particulier dans une machine à café comportant :
a) un dispositif de production de vapeur (2) conçu pour produire par chauffage d'eau de la vapeur pouvant être évacuée du dispositif de production de vapeur (2) par une première conduite (3) pouvant être ouverte ou fermée au moyen d'une soupape d'arrêt (4), et
b) une pompe de circulation (7) permettant de pomper de l'air dans une seconde conduite (8),
caractérisée ce que
c) la sortie de première conduite (3) est réalisée de façon à plonger directement dans un récipient (6) dans lequel se trouve le lait que l'on désire faire mousser, et
d) la sortie de la seconde conduite (8) est réalisée de façon à plonger directement dans le récipient (6) dans lequel se trouve le lait que l'on désire faire mousser, à distance de la première conduite (3) par rapport au trajet du fluide, de sorte que lorsque l'on chauffe le lait et qu'on le fait mousser, la vapeur et l'air puissent être transférés totalement indépendamment.

2. Installation (1) conforme à la revendication 1,
**caractérisée par**
une sonde de température (9) pouvant être plongée dans le récipient (6).

3. Installation (1) conforme à la revendication 1 ou 2,
**caractérisée par**
un dispositif de commande (10) relié à la sonde de température (6) à la pompe de circulation (7) et à la soupape d'arrêt de la vapeur (4).

4. Procédé d'actionnement d'une installation permettant de chauffer et de faire mousser du lait en particulier dans une machine à café conforme à l'une des revendications précédentes,
**caractérisé en ce que**
lorsque l'on chauffe et fait mousser le lait, de la vapeur et de l'air sont transférés indépendamment dans le récipient avec le lait.
